**Europäisches Patentamt**

**European Patent Office**

**Office européen des brevets**

(19)

(11) Veröffentlichungsnummer : **0 125 375 B1**

(12) **EUROPÄISCHE PATENTSCHRIFT**

(45) Veröffentlichungstag der Patentschrift :
21.01.87

(21) Anmeldenummer : **84100596.0**

(22) Anmeldetag : **20.01.84**

(51) Int. Cl.⁴ : **B 62 L  1/10**, B 62 K 19/38

(54) **Zweirad-Felgenbremse.**

(30) Priorität : **16.05.83 DE 3317770**

(43) Veröffentlichungstag der Anmeldung :
**21.11.84 Patentblatt 84/47**

(45) Bekanntmachung des Hinweises auf die Patenterteilung : **21.01.87 Patentblatt 87/04**

(84) Benannte Vertragsstaaten :
**AT CH DE FR GB IT LI**

(56) Entgegenhaltungen :
**EP-A- 0 080 630**
**FR-A-   895 049**
**FR-A- 1 339 368**
**FR-A- 2 295 866**
**FR-A- 2 373 438**

(73) Patentinhaber : **Weinmann GmbH & Co. KG Fahrrad-
und Motorrad-Teilefabrik
Im Haselbusch 16
D-7700 Singen-Hohentwiel (DE)**

(72) Erfinder : **Schoch, Robert
Im Steppbachwiesle 39
D-7701 Hilzingen (DE)**

(74) Vertreter : **Tetzner, Volkmar, Dr.-Ing. Dr. Jur.
Van-Gogh-Strasse 3
D-8000 München 71 (DE)**

## Beschreibung

Die Erfindung betrifft eine Zweirad-Felgenbremse, insbesondere für Fahrräder, enthaltend einen Bremsbelag,

ein den Bremsbelag tragendes, quer zur Felge geradlinig verschiebbares Gleitstück,

ein mit einem Zugseil verbundenes, gegen Federkraft drehbares Betätigungselement, das um eine mit der Verschiebeachse des Gleitstückes zusammenfallende oder parallel hierzu liegende Achse schwenkbar ist und mit dem Gleitstück über eine schräg zu dieser Achse verlaufende Steuerfläche in Verbindung steht,

ein in einer Ausnehmung der Radgabel befestigtes, das Gleitstück, den Bremsbelag und das Betätigungselement tragendes Lagergehäuse.

Eine Zweirad-Felgenbremse der genannten Art ist Gegenstand der EP-A-0 080 630 (Stand der Technik gemäß Artikel 54(3) EPÜ, veröffentlicht: 08.06.83). Bei dieser Felgenbremse können die wirksamen Bremsenteile, also insbesondere die Gleitstücke mit den Bremsbelägen sowie die Betätigungselemente, direkt an den der Felge unmittelbar gegenüberliegenden Rahmen- bzw. Gabelrohrabschnitten gehaltert sein. Die zu beiden Seiten der Felge gleichartig ausgebildeten wirksamen Bremsenteile bilden jeweils eine kompakte Einheit, die insbesondere quer zur Felge äußerst raumsparend ausgeführt sein kann und aufgrund der Zusammenordnung und Funktion der wirksamen Bremsenteile bei äußerst stabiler Bauweise zu einer feinfühligen, bei jeder Witterung höchst wirksamen Bremsbetätigung führt.

Der Erfindung liegt nun die Aufgabe zugrunde, diese Zweirad-Felgenbremse dahin weiterzuentwickeln, daß sich eine besonders einfache Montage an der Fahrradgabel ergibt.

Diese Aufgabe wird erfindungsgemäß durch dem Anspruch 1 gelöst.

Diese erfindungsgemäße Ausführungsform macht zunächst einmal weiterhin Gebrauch von der raumsparenden, kompakten Bauweise der zu einer Baueinheit zusammengefaßten wirksamen Bremsenteile, also vor allem der Gleitstücke mit den Bremsbelägen und den Betätigungselementen, die in unmittelbarer Nähe des zugehörigen Gleitstückes angeordnet sind. Eine solche Baueinheit kann nun direkt in eine dafür vorgesehene Ausnehmung der Radgabel bzw. des jeweiligen Rohres der Radgabel eingesetzt weden, wobei in dieser Ausnehmung der Radgabel einerseits und an dem Lagergehäuse andererseits die zusammenwirkenden Elemente des Bajonettverschlusses vorgesehen sind und so ineinandergreifen, daß das Lagergehäuse bei der Montage der genannten Baueinheit in die Radgabelausnehmung eingesetzt und durch ein entsprechendes Verdrehen in seine Einbaulage gebracht werden kann, in der dieses Lagergehäuse axial unverschiebbar in der Radgabelausnehmung aufgenommen und zuverlässig gehaltert ist. Eine derartige Halterung mit Hilfe eines Bajonettverschlusses gestattet auch eine rasche Demontage der Baueinheit von der Radgabel, falls dies für Wartungs- oder Reparaturarbeiten erforderlich ist.

Weitere Einzelheiten und Vorteile der Erfindung sind Gegenstand der Unteransprüche und ergeben sich aus der folgenden Beschreibung eines in der Zeichnung veranschaulichten Ausführungsbeispieles. In der Zeichnung zeigen

Figur 1. eine zum Teil im Längsschnitt dargestellte Ansicht einer die wirksamen Bremsenteile enthaltenden Baueinheit;

Figur 2 eine Stirnansicht der Bremsen-Baueinheit etwa entlang der Linie II-II in Fig. 1;

Figur 3 eine zum Teil geschnittene Ansicht eines Radgabel-Rohrabschnittes mit der zur Aufnahme des Lagergehäuses bestimmten Ausnehmung;

Figur 4 eine teilweise geschnittene Ansicht des Radgabel-Rahmenabschnittes mit eingebauter Bremsen-Baueinheit;

Figuren 5 und 6 zwei entgegengesetzte Ansichten gemäß Schnittlinie V-V sowie Pfeil VI in Fig. 4.

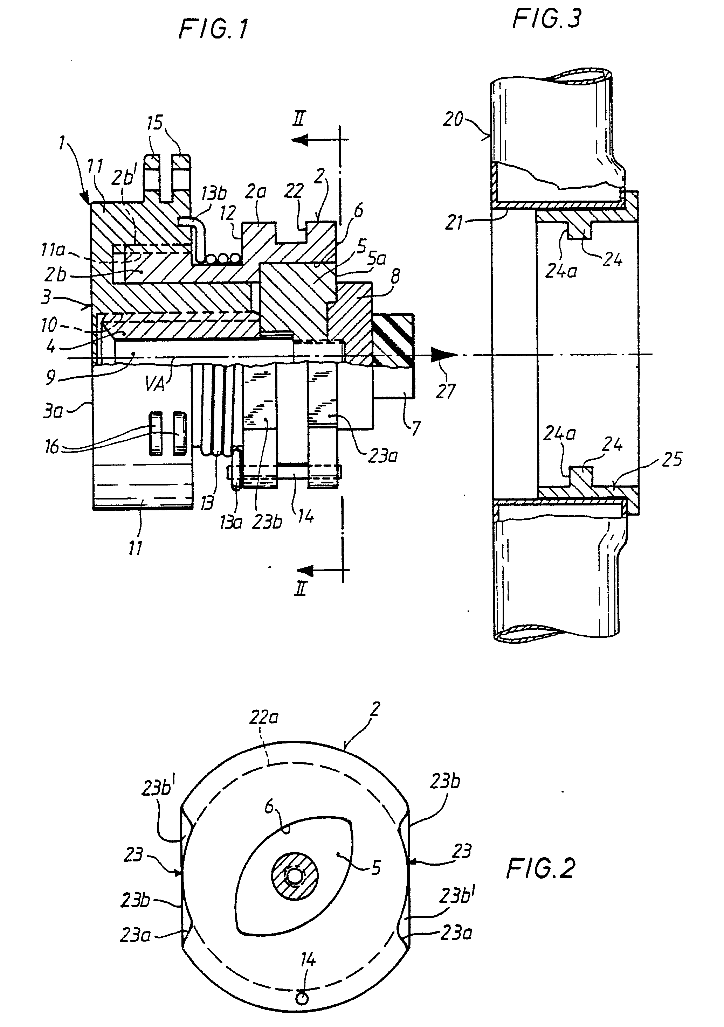

Anhand der Fig. 1 und 2 sei zunächst die Baueinheit 1 mit den wirksamen Bremsenteilen sowie deren Funktion näher erläutert.

Diese Baueinheit 1 enthält im wesentlichen ein Lagergehäuse 2, eine zum Teil darin drehbar gelagerte Gewindebuchse 3, eine zentral in diese Gewindebuchse 3 eingreifende Gewindespindel 4, ein an dem einen axialen Ende der Gewindespindel 4 befestigtes Gleitstück 5, das innerhalb einer Ausnehmung 6 des Lagergehäuses 2 aufgenommen ist, sowie ferner einen Bremsbelag 7, der von einem Bremsbelagträger 8 getragen wird und über diesen an der einer Felge zugewandten Gleitstück-Stirnseite 5a befestigt ist. Die Gleitspindel 4, das Gleitstück 5 sowie der Bremsbelagträger 8 mit dem Bremsbelag 7 können in axialer Richtung hintereinander mit Hilfe einer zentral angeordneten Schraube 9 sowie gegebenenfalls mit einer nicht näher veranschaulichten Kerbverzahnung (zwischen Gewindespindel 4 und Gleitstück 5) dreh- und verschiebefest miteinander verbunden sein. Das Gleitstück 5 besitzt generell einen von einer Kreisfläche abweichenden, im dargestellten Ausführungsbeispiel (Fig. 2) etwa spitz-elliptischen Querschnitt, wobei der Querschnitt der Ausnehmung 6 dem dieses Gleitstückes 5 angepaßt ist, so daß das Gleitstück 5 sich innerhalb der Ausnehmung 6 nur verschieben, nicht jedoch verdrehen läßt.

Die Gewindespindel 4 bildet praktisch ebenfalls einen Teil des Gleitstückes 5, und zwar den Teil, der dem Bremsbelag 7 axial entgegengerichtet ist. Diese Gewindespindel 4 greift mit ihrem Außengewinde in das Innengewinde einer zentralen Gewindebohrung 10 der Gewindebuchse 3 ein. Wenn daher die Gewindebuchse 3 gedreht wird, dann verlagert sich zwangsläufig die Gewindespindel 4 in Richtung der Verschiebeachse VA, und somit verschiebt sich zwangsläufig das zugehörige Gleitstück 5 mit dem von ihm getragenen Bremsbelagträger 8 und dem Bremsbelag 7.

Das Lagergehäuse 2 weist im veranschaulichten Ausführungsbeispiel einen ersten, inneren Gehäuseabschnitt 2a und einen zweiten, äußeren Gehäuseabschnitt 2b auf, wobei innerhalb des ersten Gehäuseabschnittes das Gleitstück 5 axial verschiebbar und innerhalb des zweiten Gehäuseabschnittes 2b die Gewindebuchse 3 dreh- und gleitbeweglich gelagert ist. Diese Gewindebuchse 3 weist auf ihrer der Felge bzw. dem Bremsbelag 7 abgewandten (in Fig. 1 linken) Außenseite einen Kragen 11 auf, der den zweiten, äußeren Abschnitt 2b des Lagergehäuses 2 übergreift und mit einem Innengewinde 11a versehen ist, das mit einem am äußeren Umfang des zweiten Gehäuseabschnittes 2b vorgesehenen Gewinde 2b′ in Eingriff steht. Während die zentrale Gewindebohrung 10 und die Gewindespindel 10 des Gleitstückes 5 eine verhältnismäßig große Gewindesteigung aufweisen, ist die Steigung des Kragen-Innengewindes 11a und des damit korrespondierenden Lagergehäuse-Außengewindes 2b′ wesentlich kleiner.

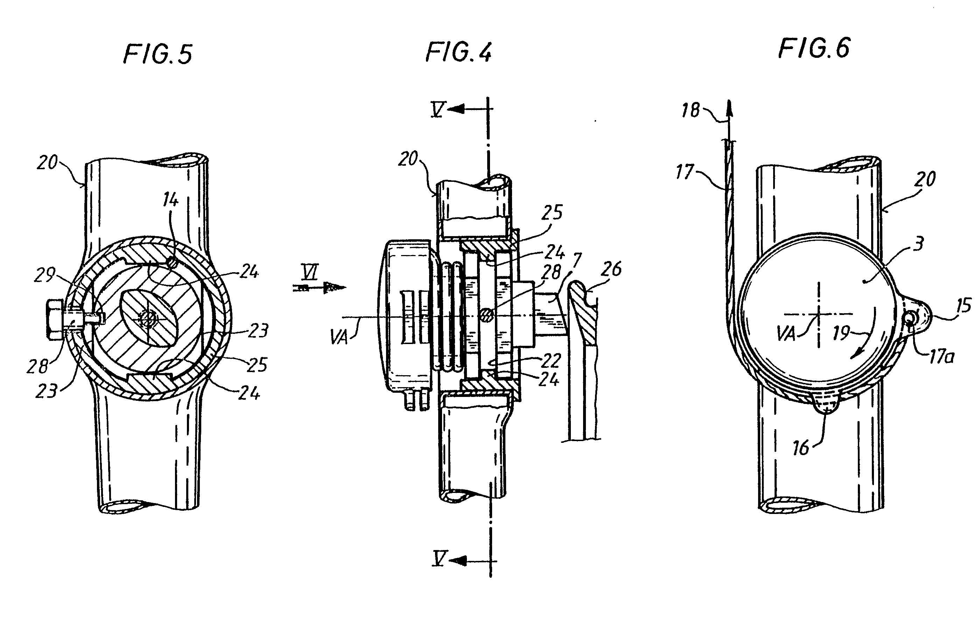

Zwischen dem ersten, inneren Lagergehäuseabschnitt 2a und dem zweiten, äußeren Lagergehäuseabschnitt 2b bzw. dem dort aufgeschraubten Gewindebuchsenkragen 11 ist eine erste Ringnut 12 ausgebildet, in der eine Schraubenfeder 13 aufgenommen ist, deren eines Ende 13a mit Hilfe eines Stiftes 14 am ersten Gehäuseabschnitt 2a und deren anderes Ende 13b am Gewindebuchsenkragen 11 festgelegt ist. Auf der Außenumfangsseite des Gewindebuchsenkragens 11 sind einerseits zwei Befestigungsvorsprünge 15 und andererseits, und zwar zu diesen Befestigungsvorsprüngen in Umfangsrichtung versetzt, zwei Führungsvorsprünge 16 jeweils etwa in Form von radial vorstehenden Lappen einstückig angebracht. An den Befestigungsvorsprüngen 15 wird ein in Fig. 6 näher veranschaulichtes Zugseil 17 mit seinem Ende 17a festgelegt, während dieses Zugseil 17 um einen Teil des Außenumfangs des Kragens 11 herumgeführt und zwischen den beiden Führungsvorsprüngen 16 in seiner Lage gehalten wird, damit es nicht abrutschen kann.

Die Gewindebuchse 3 kann auf ihrer dem Bremsbelag 7 abgewandten Außenseite 3a vollkommen geschlossen sein (wie in Fig. 1 dargestellt) und somit gleichzeitig eine Art Abschlußdeckel für die Bremsen-Baueinheit 1 bilden.

Durch die Ausbildung und Anordnung der Gewindebuchse 3 mit ihrem äußeren Kragen 11 ergibt sich bei diesem Ausführungsbeispiel somit das Betätigungselement, über das die Verschiebung des Gleitstückes 5 bewirkt wird. Wenn daher das Zugseil 17 in Richtung des Pfeiles 18 beispielsweise durch einen nicht näher veranschaulichten Bowdenzug gezogen wird, dann dreht sich die Gewindebuchse 3 entgegen der Kraft der Schraubenfeder 13 (in Richtung des Pfeiles 19 in Fig. 6) derart, daß diese Gewindebuchse 3 eine geringe Axialverschiebung gegenüber dem feststehenden Lagergehäuse 2 ausführt. Da jedoch das Innengewinde der zentralen Gewindebohrung 10 eine wesentlich größere Steigung als das Innengewinde 11a des Gewindebuchsenkragens 11 besitzt, wird bei dieser Drehbewegung der Gewindebuchse 3 die Gewindespindel 4 und damit das zugehörige Gleitstück 5 mit Bremsbelagträger 8 und Bremsbelag in axialer Richtung (Verschiebeachse VA) verschoben. Die zwischen den Gewinden 11a und 2b′ auftretende Selbsthemmung hat für den Benutzer die vorteilhafte Wirkung, daß das Bremsen nur eine verhältnismäßig geringe Kraft erfordert, da der Benutzer nur wenig mehr als die Kraft aufzubringen hat, die zur Überwindung der Kraft der Rückführfeder erforderlich ist (ein wesentlicher Teil der bei angezogener Bremse wirkenden Bremskraft wird dagegen durch das zwischen der Gewindebuchse 3 und dem Lagergehäuse 2 vorhandene Gewinde 11a bzw. 2b′ aufgenommen).

Bei der zuvor geschilderten Konstruktion der Bremsenbaueinheit 1 ergeben sich vor allem fertigungstechnische Vorteile. Die einzelnen Teile dieser Baueinheit 1 können aus jedem geeigneten, ausreichend stabilen Werkstoff hergestellt sein ; aufgrund der günstigen Bauweise und der gleichmäßigen Kraftübertragung kann sowohl die Gewindebuchse 3 als auch das Lagergehäuse 2 jeweils aus Kunststoff hergestellt werden.

Es versteht sich von selbst, daß bei einem Fahrrad zu beiden Seiten der Felge eine gleichartige Bremsen-Baueinheit 1 angeordnet wird. Zu diesem Zweck ist in der Radgabel des Fahrrades bzw. in jedem Gabelrohr 20 der Radgabel einander gegenüberliegend (fluchtend) eine Ausnehmung 21 vorgesehen (vgl. Fig. 3), in der das das Gleitstück 5, den Bremsbelag 7 und das Betätigungselement (Gewindebuchse 3) tragende Lagergehäuse 2 und somit letztlich die ganze Bremsen-Baueinheit 1 fest gehaltert wird.

Das Lagergehäuse 2 weist am Außenumfang seines ersten, inneren Gehäuseabschnittes 2a eine Umfangsnut 22 sowie — im dargestellten Ausführungsbeispiel — zwei sich diametral gegenüberliegende, etwa bis auf den Nutengrund reichende Ausfräsungen 23 auf, bei denen es sich im wesentlichen um etwa tangential zum Nutengrund 22a verlaufende Abflachungen handeln kann. Diesen Ausfräsungen 23 ist je ein von der Innenumfangsseite der Radgabelausnehmung 21 her radial in die Umfangsnut 22 eingreifender Ansatz 24 zugeordnet, dessen Umfangslänge höchstens so groß ist wie die Umfangslänge der zugehörigen Ausfräsung 23. Vorzugsweise handelt es sich bei den Ansätzen 24 um radial nach innen stehende Vorsprünge, die am Innenumfang einer im wesentlichen zylindrischen Buchse 25 einstückig ausgebildet sind, die in die quer zur Felge 26 (vgl. Fig. 4) ausgerichtete Radgabelausnehmung 21 fest eingesetzt, beispielsweise eingeschweißt, ist. Die Ansätze 24 in der Buchse 25 bilden zusammen mit den zugehörigen Ausfräsungen 23 und der Umfangsnut 22 einen Bajonettverschluß, durch den das Lagergehäuse 2 in der Radgabelausnehmung 21 gehaltert ist (vgl. Fig. 4 und 5).

Um die anhand der Fig. 1 und 2 erläuterte Bremsenbaueinheit 1 in ihren Einbauzustand gemäß Fig. 4 bis 6 zu bringen, wird diese Baueinheit 1 mit ihrem Lagergehäuse 2 gegenüber der Radgabelausnehmung 21 so angeordnet, wie es etwa aus den Fig. 1 und 3 ersichtlich ist, d. h. insbesondere werden die Ausfräsungen 23 so angeordnet, daß sie den zugehörigen Ansätzen 24 deckungsgleich gegenüberliegen, wodurch das Lagergehäuse 2 in die Radgabelausnehmung 21 bzw. in die darin befestigte Buchse 25 so weit eingeschoben werden kann, bis sich die ringförmige Umfangsnut 22 genau gegenüber den dazu passenden Ansätzen 24 befindet. Zu diesem Zweck können die in Einschieberichtung (Pfeil 27 in Fig. 1) vorderen Abschnitte 23a der Ausfräsungen 23 — wie in Fig. 2 gezeigt — etwas weiter ausgearbeitet sein als die in Einschieberichtung hinteren Ausfräsungsabschnitte 23b, so daß — wie in Fig. 2 gut zu erkennen ist — durch diese hinteren Ausfräsungsabschnitte 23b Anlageflächen 23b' gebildet sind, die gegen die ihnen zugewandten Stirnflächen 24a der Ansätze 24 zur Anlage kommen und dadurch ein weiteres Einschieben des Lagergehäuses 2 in die Buchse 25 verhindern. Wenn diese Lage des Lagergehäuses 2 innerhalb der Buchse 25 erreicht ist, braucht das Lagergehäuse 2 lediglich in Bremsbetätigungsrichtung (Pfeil 19 in Fig. 6) verdreht zu werden, wodurch die Ausfräsungen 23 gegenüber den Ansätzen 24 in Umfangsrichtung verdreht werden und wodurch dann der Bajonettverschluß in seine Verschlußlage und das Lagergehäuse 2 in seinen Einbauzustand gelangt. Das Verdrehen des Lagergehäuses 2 geschieht durch ein entsprechendes Verdrehen der ganzen Bremsen-Baueinheit 1, wobei diese Verdrehung gemäß Fig. 5 etwa 90° betragen und durch einen Anschlag begrenzt werden kann, der im veranschaulichten Ausführungsbeispiel vorteilhaft durch den die Schraubenfeder 13 arretierenden Stift 14 gebildet ist, der die Umfangsnut 22 in Querrichtung durchsetzt (vgl. Fig. 1). Eine eventuell aus Wartungs- oder Reparaturzwecken notwendig werdende Demontage der ganzen Bremsenbaueinheit 1 von der Radgabel (Rohr 20) geschieht in umgekehrter Weise, indem das Lagergehäuse 2 entgegen der Betätigungsrichtung (Pfeil 19 in Fig. 6) verdreht wird und somit die Ausfräsungen 23 mit den Ansätzen 24 wieder in Deckung zueinander gebracht werden ; es genügt dann ein einfaches Herausziehen des Lagergehäuses 2 aus der Buchse 25.

Da das Lagergehäuse 2 bei einer Bremsbetätigung mittels des Zugseiles 17 und somit bei einer Drehbetätigung der Gewindebuchse 3 stets in der Verschlußlage des Bajonettverschlusses gehalten wird, ist hier bereits mit einfachen Mitteln eine zuverlässige Halterung des Lagergehäuses 2 und somit der ganzen Bremsenbaueinheit 1 in der Radgabelausnehmung 21 gewährleistet. Das Lagergehäuse 2 kann jedoch zusätzlich noch mittels einer von der Außenseite der Radgabel eingesetzten Sicherungsschraube 28 in seiner Einbaulage gesichert werden, wie es in den Fig. 4 und 5 angedeutet ist, wobei diese Sicherungsschraube 28 in eine entsprechende Bohrung 29 des Lagergehäuses 2 eingreifen kann.

Wenn es sich auch als besonders zweckmäßig erwiesen hat, lediglich zwei sich diametral gegenüberliegende Ausfräsungen 23 und zwei sich entsprechend diametral gegenüberliegende Ansätze 24 für die Bildung des Bajonettverschlusses vorzusehen, so können selbstverständlich auch mehrere solcher durch Ausfräsungen gebildete Ausarbeiten und passend dazu angeordnete und ausgebildete Ansätze vorgesehen werden. Darüber hinaus muß die Bremsen-Baueinheit mit dem Lagergehäuse und den darin gelagerten wesentlichen Bremsenteilen nicht unbedingt in der anhand der Fig. 1 und 2 geschilderten Konstruktion aufgebaut sein, sondern es können auch Abwandlungen davon verwendet werden, wie sie sich insbesondere aus den verschiedenen Ausführungsbeispielen gemäß der europäischen Patentanmeldung No. 82 110 473.4 ergeben. In diesem Zusammenhang sei auch darauf hingewiesen, daß die Verschiebeachse VA des Gleitstückes 5 im veranschaulichten Ausführungsbeispiel zwar mit der Drehachse für das Betätigungselement zusammenfällt, diese Verdrehachse des Betätigungselementes jedoch auch durchaus gegenüber der Verschiebeachse des Gleitstückes parallel versetzt sein kann.

## Patentansprüche

1. Zweirad-Felgenbremse, insbesondere für Fahrräder, enthaltend
   a) einen Bremsbelag,
   b) ein den Bremsbelag tragendes, quer zur Felge geradlinig verschiebbares Gleitstück,
   c) ein mit einem Zugseil verbundenes, gegen Federkraft drehbares Betätigungselement, das um eine mit der Verschiebeachse des Gleitstückes zusammenfallende oder parallel hierzu liegende Achse schwenkbar ist und mit dem Gleitstück über eine schräg zu dieser Achse verlaufende Steuerfläche in Verbindung steht,
   d) ein in einer Ausnehmung der Radgabel befestigtes, das Gleitstück, den Bremsbelag und das Betätigungselement tragendes Lagergehäuse, wobei das lagergehäuse (2) mittels eines Bajonettverschlusses (22, 23, 24) in der Ausnehmung (21) der Radgabel (20) gehaltert ist.

2. Felgenbremse nach Anspruch 1, dadurch gekennzeichnet, daß das Lagergehäuse mit seinem ersten, inneren Gehäuseabschnitt (2a) in die Ausnehmung (21) der Radgabel (20) axial eingeschoben ist und am Außenumfang dieses ersten Gehäuseabschnittes (2a) eine Umfangsnut (22) sowie wenigstens zwei in Umfangsrichtung gegeneinander versetzte, etwa bis auf den Nutengrund (22a) reichende Ausarbeitungen (23) aufweist, denen je ein von der Innenumfangsseite der Radgabelausnehmung her radial in die Umfangsnut (22) eingreifender Ansatz (24) zugeordnet ist, dessen Umfangslänge etwa der der zugehörigen Ausarbeitung angepaßt ist, wobei die Ansätze (24) zusammen mit den zugehörigen Ausarbeitungen (23) und der Umfangsnut (22) den Bajonettverschluß bilden.

3. Felgenbremse nach Anspruch 2, dadurch gekennzeichnet, daß in die quer zur Felge ausgerichtete Radgabelausnehmung (21) eine im wesentlichen zylindrische Buchse (25) fest eingesetzt ist, die an ihrem Innenumfang die mit der Umfangsnut (22) des ersten Gehäuseabschnittes (2a) in Eingriff stehenden Ansätze (24) trägt.

4. Felgenbremse nach den Ansprüchen 2 und 3, dadurch gekennzeichnet, daß der erste Gehäuseabschnitt (2a) zwei sich diametral gegenüberliegende Ausarbeitungen (23) aufweist, während vom Innenumfang der Buchse (25) zwei sich diametral gegenüberliegende Ansätze (24) radial nach innen vorstehen, wobei die Zuordnung der Ausarbeitungen und der Ansätze derart vorgesehen ist, daß die Ausarbeitungen (23) im Einbauzustand des Lagergehäuses (2) gegenüber den Ansätzen (24) in Umfangsrichtung bis zu einem Anschlag (14) verdreht und zwecks Montage bzw. Demontage mit den Ansätzen in Deckung zueinander verdrehbar sind.

5. Felgenbremse nach Anspruch 1, dadurch gekennzeichnet, daß das Lagergehäuse (2) mittels einer von der Außenseite der Radgabel (20) eingesetzten Schraube (28) zusätzlich in seiner Einbaulage gesichert ist.

6. Felgenbremse nach Anspruch 1, dadurch gekennzeichnet, daß auf den außerhalb der Radgabelausnehmung (21) befindlichen, mit einem Außengewinde (2b') versehenen zweiten Lagergehäuseabschnitt (2b) ein mit Innengewinde (11a) versehener äußerer Kragen (11) einer innerhalb des Lagergehäuses (2) mit dem Gleitstück (5) in Schraubeingriff stehenden und in diesem Lagergehäuse drehbar gelagerten Gewindebuchse (3) aufgeschraubt ist, die das Betätigungselement für die axiale Verschiebung des Gleitstückes bildet, wobei auf der Außenumfangsseite des Kragens (11) der Gewindebuchse (3) zwei Befestigungsvorsprünge (15) und zwei dazu in Umfangsrichtung versetzte Führungsvorsprünge (16) für das Zugseil (17) angebracht sind.

**Claims**

1. Two-wheel rim brake, especially for bicycles, comprising :

a) a brake lining,

b) a sliding member which supports the brake lining and can be moved in a straight line at right angles to the rim,

c) an actuating element which is connected to a traction cable, is rotatable against the force of a spring, can be turned about an axis which coincides with or lies parallel to the axis of displacement of the sliding member and is connected to the sliding member by means of a control surface which is inclined relative to this axis,

d) a bearing housing which is fixed in a recess in the wheel fork and supports the sliding member, the brake lining and the actuating element, the bearing housing (2) being retained in the recess (21) in the wheel fork (20) by means of a bayonet catch (22, 23, 24).

2. Rim brake as claimed in claim 1, characterised in that the bearing housing (2) is inserted axially with its first, inner housing section (2a) into the recess (21) in the wheel fork (20) and has on the outer periphery of this first housing section (2a) a peripheral groove (22) and at least two milled out areas (23) which are offset relative to each other in the peripheral direction and extend approximately to the base (22a) of the groove and a lug (24) which projects radially from the inner peripheral surface of the recess in the wheel fork to engage in the peripheral groove (22) is associated with each of the said milled out areas, the peripheral length of the said lug being adapted to that of the appertaining milled out area, and the lugs (24) together with the appertaining milled out area (23) and the peripheral groove (22) from the bayonet catch.

3. Rim brake as claimed in claim 2, characterised in that a substantially cylindrical bush (25) which supports on its inner periphery the lugs (24) which engage with the peripheral groove (22) in the first housing section (2a) is firmly inserted into the recess (21) in the wheel fork aligned at right angles to the rim.

4. Rim brake as claimed in claims 2 and 3, characterised in that the first housing section (2a) has two diametrically opposed milled out areas (23) whilst two diametrically opposed lugs (24) project radially inwards from the inner periphery of the bush (25) and the milled out areas and the lugs are co-ordinated in such a way that in the fitting condition of the bearing housing (2) the milled out areas (23) are turned relative to the lugs (24) in the peripheral direction as far as a stop (14) and are rotatable in coincidence with the lugs for the purpose of insertion or removal.

5. Rim brake as claimed in claim 1, characterised in that the bearing housing (2) is additionally secured in its fitted position by means of a screw (28) inserted from the outside of the wheel fork (20).

6. Rim brake as claimed in claim 1, characterised in that an outer collar (11) having an internal thread (11a) of a threaded socket (3) which is in screwed engagement with the sliding member (5) inside the bearing housing (2) and rotatably mounted in the bearing housing is screwed onto the second bearing housing section (2b) which is located outside the recess (21) in the wheel fork and is provided with an external thread (2b'), said threaded socket (3) forming the actuating element for the axial displacement of the sliding member, two fastening projections (15) and two guide projections (16) for the traction cable which are offset relative to the fastening projections in the peripheral direction being mounted on the outer peripheral surface of the collar (11) of the threaded socket (3).

## Revendications

1. Frein sur jante pour cycle, en particulier pour bicyclette, comprenant :

a) une garniture de frein,

b) un coulisseau supportant la garniture et translatable de manière rectiligne transversalement par rapport à la jante,

c) un élément de manœuvre relié à un câble tracteur, rotatif contre la force d'un ressort, pouvant pivoter autour d'un axe coïncidant avec l'axe de translation du coulisseau, ou qui lui est parallèle, et qu'une surface de commande oblique sur cet axe met en liaison avec le coulisseau,

d) une cage fixée dans un évidement de la fourche et supportant le coulisseau, la garniture et l'élément de manœuvre, frein dans lequel un emboîtement à baïonnette (22, 23, 24) retient la cage (2) dans un évidement (21) de la fourche (20) de la roue.

2. Frein sur jante selon la revendication 1, caractérisé en ce que la première partie interne (2a) de la cage est insérée axialement dans l'évidement (21) de la fourche (20) de la roue et la circonférence extérieure de cette première partie de la cage (2a) comporte une gorge circonférentielle (22) ainsi qu'au moins deux parties enlevées par usinage (23), qui sont décalées l'une par rapport à l'autre dans le sens de la circonférence et qui atteignent approximativement le fond de la gorge (22a), chacune de ces parties enlevées par usinage correspondant à un épaulement (24) en saillie radialement sur le côté intérieur de la circonférence de l'évidement de la fourche et pénétrant dans la gorge circonférentielle (22), la longueur à la circonférence de cet épaulement correspondant approximativement à celle de la partie correspondante enlevée par usinage, lesdits épaulements (24) formant avec les parties correspondantes enlevées par usinage (23) et la gorge circonférentielle (22) l'emboîtement à baïonnette.

3. Frein sur jante selon la revendication 2, caractérisé en ce qu'un manchon sensiblement cylindrique (25) est fixé dans l'évidement (21) de la fourche qui est orienté transversalement par rapport à la jante, ce manchon présentant sur sa circonférence intérieure les épaulements (24) qui s'enclenchent dans la gorge circonférentielle (22) de la première partie (2a) de la cage.

4. Frein sur jante selon les revendications 2 et 3, caractérisé en ce que la première partie de la cage (2a) présente deux parties diamétralement opposées qui sont enlevées par usinage (23), tandis que deux épaulements diamétralement opposés (24) font saillie radialement vers l'intérieur sur la circonférence interne du manchon (25), la correspondance des parties enlevées par usinage et des épaulements étant prévue de telle manière que les parties enlevées par usinage (23) soient décalées dans le sens de la circonférence par rapport aux épaulements (24) et soient placées contre une butée (14) lorsque la cage (2) est en position d'assemblage, ces parties enlevées par usinage (23) pouvant subir une rotation pour le montage et le démontage et, dans ce dernier cas, être placées en face des épaulements.

5. Frein sur jante selon la revendication 1, caractérisé en ce que la cage (2) est bloquée accessoirement en position d'assemblage au moyen d'une vis (28) se mettant en place par le côté extérieur de la fourche (20).

6. Frein sur jante selon la revendication 1, caractérisé en ce qu'un collet extérieur (11) comportant un taraudage (11a) et faisant partie d'une douille taraudée (3) assemblée par vissage à l'intérieur de la cage (2) avec le coulisseau (5) et montée rotative à l'intérieur de cette cage est vissée sur la deuxième partie (2b) de la cage se trouvant à l'extérieur de l'évidement (21) de la fourche et présentant un filetage (2b'), cette douille taraudée (3) formant l'élément de manœuvre assurant la translation axiale du coulisseau, deux talons de fixation (15) et deux bossages (16) de guidage du câble tracteur (17) qui sont décalés par rapport à ces talons dans la direction de la circonférence se trouvant sur le côté circonférentiel extérieur du collet (11) de la douille taraudée (3).

0 125 375

FIG.1

FIG.3

FIG.2

FIG.5

FIG.4

FIG.6

0 125 375